# EUROPEAN PATENT APPLICATION

(11) **EP 3 412 691 A1**
(43) Date of publication of application: **12.12.2018**
(21) Application number: 17305678.9
(22) Date of filing: 07.06.2017
(51) Int. Cl.: C08F 120/54, C09K 8/524, C09K 8/588, C08F 293/00, C10L 1/24, C10L 10/16

(54) **POLYMER DISPERSIONS FOR WAX INHIBITION**

(71) Applicant: RHODIA OPERATIONS, 75009 Paris (FR)
(72) Inventor: Dufils, Pierre-Emmanuel, 75018 Paris (FR); Wilson, David James, 60580 Coye-la-foret (FR); Hatchman, Kevan, Wolverhampton West Midland WV4 6GB (GB)
(74) Representative: Cordier, Pascal Christian

(57) **Abstract**

The present invention relates to a process of a process for preparation of a polymer dispersion comprising a step (E) of free radical polymerization in an aqueous medium (M) in the presence of:
- at least a pre-polymer (p0) soluble in the medium (M),
- at least one free-radical polymerization initiator, and
- at least one ethylenically unsaturated hydrophobic monomer (m) which is chosen from an alkyl (meth)acrylate of at least C6,
wherein the aqueous medium (M) includes water and at least one water miscible solvent.

## Description

The present invention relates to polymer dispersions having reduced surfactant levels and process for making the same. The present invention also relates to a method of inhibiting wax formation and/or improving the flow properties of oil comprising adding to the oil the polymer dispersion of this invention.

In the hydrocarbon drilling and production industry, crude oil refers to hydrocarbon products extracted from the ground together with the associated aqueous phase and minor amounts of solids. The proportion of hydrocarbons in crudes varies from 5% to almost 100%, and comprises thousands of different molecules that may be grouped into four families of compounds: saturates, aromatics, resins and asphaltenes. Saturates generally constitute the lightest fraction of the crude oil while within the saturates family, C18+ long-chain linear paraffins represent the heavy fraction of the saturates and are responsible for wax deposit formation.

Waxes (also known as paraffins) are linear and branched aliphatic molecules (> C18) present within crude oil. The presence of waxes, even small amount, can complicate the extraction of crude oil. As crude oil cools upon exiting the well, it undergoes changes in temperature, pressure, and composition. As the pressure initially decreases, the lower molecular weight compounds expand and the solubility of the wax is increased. However, a further decrease in the pressure causes the light ends of the crude oil to vaporize, decreasing the solubility of the wax in the oil. Additionally, the temperature decreases to a point where the wax will no longer be soluble, causing wax crystals to form. These wax crystals can form a three dimensional network and cause the crude oil to gel. The temperature at which gelation occurs is known as the pour point.

Alternatively, the precipitated waxes can deposit on the pipeline walls, restricting the flow of oil. Ultimately, the gelation or deposition results in plugged production tubing and pipelines and will cause costly downtime as the production equipment is cleaned or repaired.

Many approaches are used to solve paraffin issues in the oilfield, such as mechanical cleaning, hot solvent washes to dissolve deposited wax, and chemical treatments. Whereas cleaning and dissolving wax are implemented post deposition, chemical treatments such as those with pour point depressants (PPDs) and wax inhibitors are used for prevention. These inhibitors are used to delay or to modify the crystallization of waxes and thereby to improve the oil flow properties and to prevent the agglomeration of crystals that are formed on the walls.

Most PPD polymers and wax inhibitors have limited solubility in organic solvents (such as kerosene or aromatic solvents) and therefore large amounts of solvents must be used to obtain a viable product. These products often have a low active content, i.e. 1-20 %, which adds to the raw material, handling, transportation, and storage costs. Safety hazards, such as flammability, and other health concerns also exist with organic solvents. Furthermore, the formulations tend to gel at low temperatures.

Other type of PPD polymers and wax inhibitors such as aqueous dispersions of polymersare known in the artAs examples, SHELL in EP 448,166, then WO 98/51731 and British Petroleum in WO 98/33846 discloses the preparation of a dispersion in water of a mixture of n-alkyl acrylate copolymers in the presence of surfactant(s) and/or surfactant polymers with a high-pressure homogenizer. Such a preparation process especially exhibits the drawback of being not very economical at industrial scale because it requires two preparation stages as well as the use of a specific dispersion equipment.

U.S. Pat. No. 5,418,278 or EP 359,061 of HENKEL proposes emulsions that contain n-alkyl acrylate copolymers and unsaturated ethylene derivatives of carboxylic acid or anhydride in the presence of a surfactant. The major drawback of such a solution resides in the fact that to be stable, the emulsion should contain a large amount of acid or anhydride, which not only can interfere with the overall performance of the product but also limits its use with particular crude oils.

Latex dispersions have also been described in WO 03/014170 are prepared by emulsion copolymerization. This kind of formulation tends to exhibit an unsatisfactory stability of the dispersions over weeks to months for storage and in case of temperature variations. Besides, the emulsion copolymerization implies the use of surfactants.

Hence, there is a need of wax inhibitor compositions that do not exhibit the drawback of the above mentioned formulation, notably due to the presence of flammable solvents, and exhibiting a suitable stability over time, even in case of temperature variation.

According to a first aspect, a subject of the present invention is a process for preparation of a polymer dispersion, suitable as a wax inhibitor composition, comprising a step (E) of free radical polymerization in an aqueous medium (M), in the presence of:
(1) at least a pre-polymer (p0) soluble in the medium (M) of formula (I):

   (R¹¹)*x*-Z¹¹-C(=S)-Z¹²-[A]-R¹² (I)

   wherein:
   Z¹¹ represents C, N, O, S or P,
   Z¹² represents S or P,
   R¹¹ and R¹², which may be identical or different, represent:
      - an optionally substituted alkyl, acyl, aryl, alkene or alkyne group (i), or
      - a saturated or unsaturated, optionally substituted or aromatic carbon-based ring (ii), or
      - a saturated or unsaturated, optionally substituted heterocycle (iii), these groups and rings (i), (ii) and (iii) possibly being substituted with substituted phenyl groups, substituted aromatic groups or groups: alkoxycarbonyl or aryloxycarbonyl (-COOR), carboxyl (-COOH), acyloxy (-O₂CR), carbamoyl (-CONR₂), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-NR₂), halogen, allyl, epoxy, alkoxy (-OR), S-alkyl, S-aryl, groups of hydrophilic or ionic nature such as the alkali metal salts of carboxylic acids, the alkali metal salts of sulphonic acid, polyalkylene oxide (PEO or PPO) chains and cationic substituents (quaternary ammonium salts), R respresenting an alkyl or aryl group,
   x corresponds to the valency of Z¹¹, or alternatively x is 0, in which case Z¹¹ represents a phenyl, alkene or alkyne radical, optionally substituted with an optionally substituted alkyl; acyl; aryl; alkene or alkyne group; an optionally substituted, saturated, unsaturated, or aromatic, carbon-based ring; an optionally substituted, saturated or unsaturated heterocycle; alkoxycarbonyl or aryloxycarbonyl (-COOR); carboxyl (COOH); acyloxy (-O₂CR); carbamoyl (-CONR₂); cyano (-CN); alkylcarbonyl; alkylarylcarbonyl; arylcarbonyl; arylalkylcarbonyl; phthalimido; maleimido; succinimido; amidino; guanidimo; hydroxyl (-OH); amino (-NR₂); halogen; allyl; epoxy; alkoxy (-OR), S-alkyl; S-aryl groups; groups of hydrophilic or ionic nature such as the alkali metal salts of carboxylic acids, the alkali metal salts of sulphonic acid, polyalkylene oxide (PEO or PPO) chains and cationic substituents (quaternary ammonium salts); and
      [A] represents a polymer chain;
(2) at least one free-radical polymerization initiator, and
(3) at least one ethylenically unsaturated hydrophobic monomer (m) which is chosen from an alkyl (meth)acrylate of at least C6, typically, of or more than C8,
wherein the aqueous medium (M) includes water and at least one water miscible solvent, typically a glycol.

The step (E) may be typically performed in batch or semi-batch.

The step (E) is generally implemented without any surfactant in addition to the pre-polymer (p0) and the monomers (m). In this case, the emulsion polymerization of hydrophobic monomers (m) can be performed directly in batch ab initio conditions using pre-polymer (p0) soluble in the specific medium (M). Amphiphilic block copolymers thereby form and self-assemble into self-stabilized dispersions within the course of the polymerization by polymerization-induced self-assembly (PISA).

In other words, dispersions according to the instant invention are made via a macromolecular self-assembly of polymeric emulsifier particles.

According to another aspect of the invention, a subject of the present invention is polymer dispersions obtainable according to the above-mentioned process.

In some specific cases, the use of surfactants may be contemplated in step (E) (even if not compulsory, it may be of interest in some cases, depending on the final application intended for the dispersion).

In the scope of the invention, the PISA is performed in a specific hydrophilic medium, comprising water and a water miscible solvent. The inventors have found that such solvent does not affect the mechanism implied by the PISA process.

According to an advantageous aspect of the instant invention, the solvent may be selected from solvents having significant antifreeze properties to the obtained polymer dispersions, preferably a glycol.

The process as defined above allows obtaining polymer dispersions with relatively low viscosity, high content (typically more than 30% by weight based on the total weight of the dispersion) in a specific medium. Without wishing to be related to any theory, this contributes to the stability of the dispersions, especially at low temperature.

The polymer dispersions of the instant invention can be typically used as environmentally friendly wax inhibitor compositions dispersed in a medium free of flammable solvents.

One of the advantages of these polymer dispersion is that they have high solids loading, i.e. 40%, 50% or more.

These dispersions also present long term stability to creaming, coagulation or sedimentation, and are compatible with suitable additives such as corrosion inhibitors that may present in the production system or injection lines.

Furthermore, the dispersions of the instant invention exhibit an especially good stability at wide range, for example, from -20°C to 20°C, 40°C, 50°C or more. Typically, no signs of phase separation and no solidification for these dispersions are observed at this range of temperatures over at least one month.

### The polymer chain [A]

The polymer chain [A] is selected in order to impart the required solubility for pre-polymer (p0) in the medium (M). The exact nature of this polymer chain may vary to quite a large extent and it can be adjusted, case by case, according to the medium (M) used. The type of wax inhibitor composition into which it is desired to introduce the polymer of the dispersion should also be considered.

Typically, the polymer chain [A] can, be selected from the homo- and copolymers (random, gradient or block) resulting from the polymerization of at least one or more hydrophilic monomers (mAₕ) selected from:
- unsaturated carboxylic acid amides, such as acrylamide, methacrylamide, N-methylolacrylamide or -methacrylamide, N-alkyl(meth)acrylamides, N,N-dimethyl(meth)acrylamide, N,N-dimethylaminomethyl(meth)acrylamide, 2-(N,N-dimethylamino)ethyl(meth)acrylamide, 3-(N,N-dimethylamino)propyl(meth)acrylamide, or 4-(N,N-dimethylamino)butyl(meth)acrylamide,
- vinylamine amides, in particular vinylformamide, vinylacetamide, N-vinylpyrrolidone and N-vinylcaprolactam,
- α,β monoethylenically unsaturated amino esters, such as 2-(dimethylamino)ethyl acrylate (ADAM), 2-(dimethylamino)ethyl methacrylate (DMAM or MADAM), 3-(dimethylamino)propyl methacrylate, 2-(tert-butylamino)ethyl methacrylate, 2-(dipentylamino)ethyl methacrylate, or 2-(diethylamino)ethyl methacrylate, vinylpyridines,
- vinylimidazolines,
- ethylenically unsaturated monocarboxylic and dicarboxylic acids, such as acrylic acid, methacrylic acid, itaconic acid, maleic acid or fumaric acid,
- monomers carrying at least one vinyl phosphonate function, such as vinylphosphonic acid, vinylphosphonic acid dimethyl ester, vinylphosphonic acid bis(2-chloroethyl) ester, vinylidenediphosphonic acid, vinylidenediphosphonic acid tetraisopropyl ester or alpha-styrenephosphonic acid, or mixtures thereof, mixtures of two or more of these monomers,
- ammoniumacryloyl or acryloyloxy monomers,
- trimethylammoniumpropylmethacrylate salts, in particular the chloride,
- trimethylammoniumethylacrylamide or -methacrylamide chloride or bromide,
- trimethylammoniumbutylacrylamide or -methacrylamide methylsulfate,
- trimethylammoniumpropylmethacrylamide methylsulfate (MAPTA MeS),
- (3-methacrylamidopropyl)trimethylammonium chloride (MAPTAC),
- (3-acrylamidopropyl)trimethylammonium chloride or methylsulfate (APTAC or APTA MeS),
- alkyl-polyalkoxylated (meth)acrylates that comprise one linear or branched (C5-C40)alkyl-polyethoxylated group, more typically (C10-C22)alkyl-polyethoxylated group per molecule, such as decyl-polyethoxylated (meth)acrylates, tridecyl-polyethoxylated (meth)acrylates, myristyl-polyethoxylated (meth)acrylates, cetyl-polyethoxylated (meth)acrylates, stearyl-polyethoxylated (methyl)acrylates, eicosyl-polyethoxylated (meth)acrylates, behenyl- polyethoxylated (meth)acrylates, even more typically decyl-polyethoxylated methacrylates, tridecyl-polyethoxylated methacrylates, myristyl-polyethoxylated methacrylates, cetyl-polyethoxylated methacrylates, stearyl-polyethoxylated methylacrylates, eicosyl-polyethoxylated methacrylates, behenyl- polyethoxylated methacrylates, and mixtures thereof,
- methacryloyloxyethyltrimethylammonium chloride or methylsulfate,
- acryloyloxyethyltrimethylammonium (ADAMQUAT) salts, such as acryloyloxyethyltrimethylammonium chloride or acryloyloxyethyltrimethylammonium methylsulfate (ADAMQUAT Cl or ADAMQUAT MeS),
- methyldiethylammoniumethyl acrylate methylsulfate (ADAEQUAT MeS),
- benzyldimethylammoniumethyle acrylate chloride or methylsulfate (ADAMQUAT BZ 80),
- 1-ethyl 2-vinylpyridinium bromide, chloride or methylsulfate or 1-ethyl 4-vinylpyridinium bromide, chloride or methylsulfate,
- N,N-dialkyldiallylamine monomers, such as N,N-dimethyldiallylammonium chloride (DADMAC),
- dimethylaminopropylmethacrylamide, N-(3-chloro-2-hydroxypropyl)trimethylammonium chloride (DIQUAT chloride),
- dimethylaminopropylmethacrylamide, N-(3-methylsulfate-2-hydroxypropyl)-trimethylammonium methylsulfate (DIQUAT methylsulfate),
- the monomer of formula 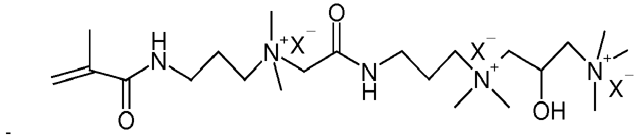
- where X- is an anion, preferably chloride or methylsulfate,

Alternatively, the hydrophilic monomers (mAₕ) may comprise monomers selected from:
- esters of α,β-ethylenically unsaturated monocarboxylic and dicarboxylic acids with C2-C3 alkanediols, for example 2-hydroxyethyl acrylate, 2-hydroxyethyl methacrylate, 2-hydroxyethyl ethacrylate, 2-hydroxypropyl acrylate, 2-hydroxypropyl methacrylate, 3-hydroxypropyl acrylate, 3-hydroxypropyl methacrylate and polyalkylene glycol(meth)acrylates;
- α,β-ethylenically unsaturated monocarboxylic acid amides and the N-alkyl and N,N-dialkyl derivatives thereof, such as acrylamide, methacrylamide, N-methyl(meth)acrylamide, N-ethyl(meth)acrylamide, N-propyl(meth)acrylamide, N,N-dimethyl(meth)acrylamide, N,N-diethyl(meth)acrylamide, morpholinyl(meth)acrylamide, and metholylacrylamide (acrylamide and N,N-dimethyl(meth)acrylamide prove to be in particular advantageous);
- N-vinyllactams and derivatives thereof, for example N-vinylpyrrolidone and N-vinylpiperidone;
- open-chain N-vinylamide compounds, for example N-vinylformamide, N-vinyl-N-methylformamide, N-vinylacetamide, N-vinyl-N-methylacetamide, N-vinyl-N-ethylacetamide, N-vinylpropionamide, N-vinyl-N-methylpropionamide and N-vinylbutyramide;
- esters of α,β-ethylenically unsaturated monocarboxylic and dicarboxylic acids with aminoalcohols, for example N,N-dimethylaminomethyl(meth)acrylate, N,N-dimethylaminoethyl(meth)acrylate, N,N-diethylaminoethyl acrylate, and N,N-dimethylaminopropyl(meth)acrylate;
- amides of α,β-ethylenically unsaturated monocarboxylic and dicarboxylic acids with diamines comprising at least one primary or secondary amino group, such as N-[2-(dimethylamino)ethyl]acrylamide, N[2-(dimethylamino)ethyl]methacrylamide, N-[3-(dimethylamino)propyl]acrylamide, N-[3-(dimethylamino)propyl]methacrylamide, N-[4-(dimethylamino)butyl]acrylamide and N-[4-(dimethylamino)butyl]methacrylamide;
- ethylenically unsaturated carboxylic acids, sulfonic acids and phosphonic acids, and/or derivatives thereof such as acrylic acid (AA), methacrylic acid, ethacrylic acid, α-chloroacrylic acid, crotonic acid, maleic acid, maleic anhydride, itaconic acid, citraconic acid, mesaconic acid, glutaconic acid, aconitic acid, fumaric acid, monoethylenically unsaturated dicarboxylic acid monoesters comprising 1 to 3 and preferably 1 to 2 carbon atoms, for example monomethyl maleate, vinylsulfonic acid, (meth)allylsulfonic acid, sulfoethyl acrylate, sulfoethyl methacrylate, sulfopropyl acrylate, sulfopropyl methacrylate, 2-hydroxy-3-acryloyloxypropylsulfonic acid, 2-hydroxy-3-methacryloyloxypropylsulfonic acid, styrenesulfonic acids, 2-acrylamido-2-methylpropanesulfonic acid, vinylphosphonic acid, α-methylvinylphosphonic acid and allylphosphonic acid;
- N-diallylamines, N,N-diallyl-N-alkylamines, acid-addition salts thereof and quaternization products thereof, the alkyl used here preferentially being C1-C3-alkyl;
- N,N-diallyl-N-methylamine and N,N-diallyl-N,N-dimethylammonium compounds, for example the chlorides and bromides;
- nitrogenous heterocycles substituted with vinyl and allyl, for example N-vinylimidazole, N-vinyl-2-methylimidazole, heteroaromatic compounds substituted with vinyl and allyl, for example 2- and 4-vinylpyridine, 2- and 4-allylpyridine, and salts thereof;
- sulfobetaines; and
- mixtures and combinations of two or more of the abovementioned monomers.

The following monomers (mAₕ) are in particular advantageous:
- ethylenically unsaturated monocarboxylic and dicarboxylic acids, such as acrylic acid, methacrylic acid, itaconic acid, maleic acid or fumaric acid,
- unsaturated carboxylic acid amides, such as acrylamide, methacrylamide, N-methylolacrylamide or -methacrylamide, N-alkyl(meth)acrylamides, N,N-dimethyl(meth)acrylamide, N,N-dimethylaminomethyl(meth)acrylamide, 2-(N,N-dimethylamino)ethyl(meth)acrylamide, 3-(N,N-dimethylamino)propyl(meth)acrylamide, or 4-(N,N-dimethylamino)butyl(meth)acrylamide,
- vinylamine amides, in particular vinylformamide, vinylacetamide, N-vinylpyrrolidone and N-vinylcaprolactam.

According to the present description, the term "(meth)acrylate" refers collectively and alternatively to the acrylate and methacrylate and the term "(meth)acrylamide" refers collectively and alternatively to the acrylamide and methacrylamide, so that, for example, "butyl (meth)acrylate" means butyl acrylate and/or butyl methacrylate.

According to an advantageous embodiment, polymer chain [A] is a polymer chain resulting from the polymerization of hydrophilic monomers (mAₕ) only, provided that the pre-polymer (p0) remains soluble in the medium (M)

According to another specific embodiment, the polymer chain [A] comprises some units which are hydrophobic in nature, provided that the pre-polymer (p0) remains, overall, soluble in the medium (M). In that case, the polymer chain [A] generally results from a copolymerization (random or block) of a hydrophilic monomer (mAₕ) as defined above and a hydrophobic monomer (mA_{H}).

Said hydrophobic monomers (mA_{H}) including for example styrene or its derivatives, butadiene, chloroprene, (meth)acrylic esters, vinyl esters of a carboxylic acid, for instance vinyl acetate, vinyl versatate or vinyl propionate,and vinyl nitriles.

The term "(meth)acrylic esters" denotes esters of acrylic acid and of methacrylic acid with hydrogenated or fluorinated C₁-C₁₂ and preferably C₁-C₈alcohols. Among the compounds of this type that may be mentioned are: methyl acrylate, ethyl acrylate, propyl acrylate, n-butyl acrylate, isobutyl acrylate, 2-ethylhexyl acrylate, t-butyl acrylate, methyl methacrylate, ethyl methacrylate, n-butyl methacrylate, isobutyl methacrylate.

The vinyl nitriles more particularly include those containing from 3 to 12 carbon atoms, such as, in particular, acrylonitrile and methacrylonitrile.

It should be noted that the styrene may be totally or partially replaced with derivatives such as α-methylstyrene or vinyltoluene.

Other ethylenically unsaturated monomers (mA_{H}) that may be used, alone or as mixtures, or that are copolymerizable with the above monomers are especially:
- vinyl halides,
- vinylamine amides, especially vinylformamide or vinylacetamide,
- N'-alkyl(meth)acylamides of at least C8, N',N'-dialkyl(meth)acrylamides of at least C6.

It should moreover be noted that the polymer chain [A] of the pre-polymer (p0) has more particularly a number-average molar mass of less than 50 000 g/mol, for example, less than 20 000 g/mol, and more than 500 g/mol. Typically, the polymer chain [A] has a number-average molar mass between 1 000 and 10000 g/mol. Preferably, the polymer chain [A] has a molar mass between 2 000 and 5 000 g/mol. These number-average molar masses can be for example measured by steric exclusion chromatography, using polyethylene glycol as standard or triple detection (GPC).

### The pre-polymer (p0)

The pre-polymer (p0) is "soluble in a medium (M)" which means that the pre-polymer may be solubilized in the medium (M) without phase separation on the macroscopic scale at the pre-polymer concentration used in step (E), in the absence of the monomer (m). Concretely, the pre-polymer (p0) is solubilized in medium (M) at the beginning of step (E). To this end, the polymer chain [A] included in the pre-polymer (p0) is soluble in the medium (M).

The pre-polymer (p0) of invention may typically be obtained by a preparation step (E⁰) of controlled radical polymerization of a composition comprising:
- monomers containing (and usually consisting of) identical or different (generally identical) hydrophilic monomers (mAₕ) as defined above, optionally together with at least one hydrophobic monomer (mA_{H}) as defined above;
- a radical polymerization control agent including a group (R¹¹)*x-*Z¹¹-C(=S)-Z¹²-, wherein R¹¹, *x* , Z¹¹, and Z¹² being defined above, (preferably xanthate, dithiocarbamate, dithiocarbazate, trithiocarbonate, dithioester or dithiobenzoate); and
- a free-radical polymerization initiator which is typically as defined here-after.

The group (R¹¹)*x*-Z¹¹-C(=S)-Z¹²- of pre-polymer (p0), which may especially be a thiocarbonylthio group, is typically introduced via the control agent used in the controlled radical polymerization performed in the above-mentioned step (E⁰), which is typically a RAFT or MADIX control agent. According to a specific embodiment, the control agent used in step (E⁰) may contain serval groups of this type (for example several thiocarbonylthio groups).

The radical polymerization control agent used in step (E⁰) may especially have the formula (F) below : 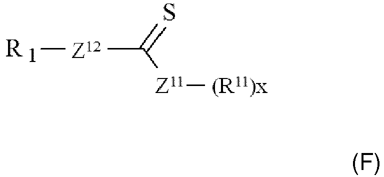 in which:
- R¹¹, *x*, Z¹¹, and Z¹² being defined above for pre-polymer (p0); and
- R₁ represents:
   - an optionally substituted alkyl, acyl, aryl, aralkyl, alkene or alkyne group,
   - a saturated or unsaturated, aromatic, optionally substituted carbocycle or heterocycle, or
   - a polymer chain.
R1, when substituted, may be substituted with optionally substituted phenyl groups, optionally substituted aromatic groups, saturated or unsaturated carbocycles, saturated or unsaturated heterocycles, or groups selected from the following: alkoxycarbonyl or aryloxycarbonyl (-COOR), carboxyl (-COOH), acyloxy (-O2CR), carbamoyl (-CONR2), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-NR2), halogen, perfluoroalkyl CnF2n+1, allyl, epoxy, alkoxy (-OR), S-alkyl, S-aryl, groups of hydrophilic or ionic nature such as alkali metal salts of carboxylic acids, alkali metal salts of sulfonic acid, polyalkylene oxide chains (PEO, PPO), cationic substituents (quaternary ammonium salts), R representing an alkyl or aryl group, or a polymer chain.

According to one particular embodiment, R₁ is a substituted or unsubstituted, preferably substituted, alkyl group.

The optionally substituted alkyl, acyl, aryl, aralkyl or alkyne groups to which reference is made in the present description generally contain 1 to 20 carbon atoms, preferably 1 to 12 and more preferentially 1 to 9 carbon atoms. They may be linear or branched. They may also be substituted with oxygen atoms, in particular in the form of esters or sulfur or nitrogen atoms.

Among the alkyl radicals, mention may be made especially of methyl, ethyl, propyl, butyl, pentyl, isopropyl, tert-butyl, pentyl, hexyl, octyl, decyl or dodecyl radicals.

For the purposes of the present description, the alkyne groups are radicals generally containing from 2 to 10 carbon atoms, and contain at least one acetylenic unsaturation, such as the acetylenyl radical.

For the purposes of the present description, the acyl groups are radicals generally containing from 1 to 20 carbon atoms with a carbonyl group.

Among the aryl radicals which may be used according to the invention, mention may be made in particular of the phenyl radical, optionally substituted especially with a nitro or hydroxyl function.

Among the aralkyl radicals, mention may be made in particular of the benzyl or phenethyl radical, optionally substituted especially with a nitro or hydroxyl function.

When R₁ is a polymer chain, this polymer chain may be derived from a radical or ionic polymerization or derived from a polycondensation.

Advantageously, in step (E⁰), the radical polymerization control agent is a xanthate compound, for instance O-ethyl-S-(1-methoxycarbonyl ethyl) xanthate of formula (CH₃CH(CO₂CH₃))S(C=S)OCH₂CH₃.

A control agent that is particularly suited to the implementation of step (E⁰) is the compound sold by the company Solvay under the name Rhodixan^{®} A1.

The molecular weights (Mn) of the pre-polymer (p0) is typically from 1 000 to 100 000 g/mol, for example between 2 000 to 50 000 g/mol and in particular between 2500 to 10 000 g/mol.

### The free-radical polymerization initiator

Any source of free radicals which is known per se as being suitable for polymerization processes in a medium comprising water miscible solvent may be used in steps (E⁰) and (E) of the polymerization of the invention.

The radical polymerization initiator may, for example, be selected from the following initiators:
- peroxyoctoate, t-butyl peroxyneodecanoate, t-butyl peroxyisobutyrate, lauroyl peroxide, t-amyl peroxypivalate, t-butyl peroxypivalate, dicumyl peroxide, benzoyl peroxide, potassium persulfate, ammonium persulfate,
- azo compounds such as: 2-2'-azobis(isobutyronitrile), 2,2'-azobis(2-butanenitrile), 4,4'-azobis(4-pentanoic acid), 1,1'-azobis(cyclohexanecarbonitrile), 2-(t-butylazo)-2-cyanopropane, 2,2'-azobis[2-méthyl-N-(1,1)-bis(hydroxymethyl)-2-hydroxyethyl]propionamide, 2,2'-azobis(2-methyl-N-hydroxyethyl]propionamide, 2,2'-azobis(N,N'-dimethyleneisobutyramidine)dichloride, 2,2'-azobis(2-amidinopropane)dichloride, 2,2'-azobis(N,N'-diméthyleneisobutyramide), 2,2'-azobis(2-methyl-N-[1,1-bis(hydroxymethyl)-2-hydroxyethyl]propionamide), 2,2'-azobis(2- methyl-N-[1,1-bis(hydroxymethyl)ethyl]propionamide), 2,2'-azobis[2-methyl-N-(2-hydroxyethyl)propionamide] or 2,2'-azobis(isobutyramide)dihydrate,
- redox systems comprising combinations such as:
   mixtures of hydrogen peroxide, alkyl peroxide, peresters, percarbonates and the like and any iron salts, titanous salts, zinc formaldehyde sulfoxylate or sodium formaldehyde sulfoxylate, and reducing sugars,
   alkali metal or ammonium persulfates, perborate or perchlorate in combination with an alkali metal bisulfite, such as sodium metabisulfite, and reducing sugars, and alkali metal persulfates in combination with an arylphosphinic acid, such as benzenephosphonic acid and the like, and reducing sugars.

According to one advantageous embodiment, use may be made of a radical initiator of redox type, which has the advantage of not requiring specific heating of the reaction medium (no thermal initiation). It is typically a mixture of at least one water-soluble oxidizing agent with at least one water-soluble reducing agent.

The oxidizing agent present in the redox system may be selected, for example, from peroxides such as: hydrogen peroxide, tert-butyl hydroperoxide, cumene hydroperoxide, t-butyl peroxyacetate, t-butyl peroxybenzoate, t-butyl peroxyoctoate, t-butyl peroxyneodecanoate, t-butyl peroxyisobutyrate, lauroyl peroxide, t-amyl peroxypivalate, t-butyl peroxypivalate, dicumyl peroxide, benzoyl peroxide, sodium persulfate, potassium persulfate, ammonium persulfate or potassium bromate.

The reducing agent present in the redox system may typically be selected from sodium formaldehyde sulfoxylate (in particular in dihydrate form, known under the name Rongalit, or in the form of an anhydrite), ascorbic acid, erythorbic acid, sulfites, bisulfites or metasulfites (in particular alkali metal sulfites, bisulfites or metasulfites), nitrilotrispropionamides, and tertiary amines and ethanolamines (which are preferably water-soluble).

Possible redox systems comprise combinations such as:
mixtures of water-soluble persulfates with water-soluble tertiary amines,
mixtures of water-soluble bromates (for example alkali metal bromates) with water-soluble sulfites (for example alkali metal sulfites),
mixtures of hydrogen peroxide, alkyl peroxide, peresters, percarbonates and the like and any iron salts, titanous salts, zinc formaldehyde sulfoxylate or sodium formaldehyde sulfoxylate, and reducing sugars,
alkali metal or ammonium persulfates, perborate or perchlorate in combination with an alkali metal bisulfite, such as sodium metabisulfite, and reducing sugars, and
alkali metal persulfates in combination with an arylphosphinic acid, such as benzenephosphonic acid and the like, and reducing sugars.

An advantageous redox system comprises (and preferably consists of) for example a combination of ammonium persulfate and sodium formaldehyde sulfoxylate.

### The aqueous medium (M)

The water is preferably present in the medium (M) in an amount of at least 50% by weight, preferably at least 60% by weight based on the total weight of the aqueous medium.

The water miscible solvent is preferably present in the medium (M) in an amount of at least 15% by weight of the total weight of the medium, for example between 20 and 50%, for example, at least 25%, or at least 30%, e.g. between 25 and 40% by weight.

Suitable water miscible solvents include saturated or unsaturated monohydric alcohols and polyhydric alcohols, as well as alkylether diols such as, for example, methanol, ethanol, isopropanol, cetyl alcohol, benzyl alcohol, oleyl alcohol, 2-butoxyethanol, glycol, , such as, for example, ethylene glycol, polyethylene glycol, propylene glycol, hexylene glycol, , ethylene glycol monoethyl ether, ethylene glycol mono n-butyl ether (EGMBE), propylene glycol monoethyl or and diethylene glycol monomethyl ether.

According to one embodiment of the invention, the water miscible solvent is preferably a glycol, for example, monoethylene glycol and/or tripropylene glycol.

### The polymer dispersion

According to the present description, "polymer dispersion" denotes a composition comprising a polymer in the form of microscopically observable particles having dimensions between 100 nm and 1 microns (most commonly between 200 nm and 800 nm, and typically between 200 and 600 nm) dispersed within a phase consisting of a medium as defined above. A dispersion of polymers, within the meaning given to the term as used in the present description, should be distinguished from a solution of polymers, which does not contain polymers in the form of microscopically observable particles. Typically, the dispersion has a milky appearance and widely scatters light, whereas a solution usually has a transparent appearance.

The medium (M) of the present invention is used as a liquid carrier, typically presents as a continuous phase, and comprising at least one water miscible solvent, typically glycol, and optionally salts or else water-soluble compounds.

### The monomer (m)

According to the present invention, alkyl (meth)acrylate of "Cn" means an alkyl (meth)acrylate with the alkyl group containing n carbon atoms. For example, "alkyl (meth)acrylate of C8" means an alkyl (meth)acrylate with the alkyl group containing 8 carbon atoms.

According to one embodiment, the at least one monomer (m) is chosen from an alkyl (meth)acrylate of or at least C8, for example of or at least C12, e.g. of or at least C14. Besides, the at least one monomer (m) is chosen from an alkyl (meth)acrylate of or less than C36, for example of or less than C30, e.g. of or less than C24.

According to one specific embodiment, the at least one monomer (m) is chosen from an alkyl (meth)acrylate between C8 and C24 (for example, between C16 and C22), and optionally in mixture with monomers of less than C16. For example, the at least one monomer is a mixture of an alkyl (meth)acrylate between C18 and C25 with an alkyl (meth)acrylate between C8 and C18.

The monomer (m) is for example chosen from iso-octyl (meth)acrylate, iso-bornyl (meth)acrylate, lauryl (meth)acrylate, octadecyl (meth)acrylate, 2-ethyl hexyl (meth)acrylate, C22 alkyl acrylate and/or a mixture thereof.

According to a specific embodiment, the step (E) may be a copolymerization step using co-monomers (m') in addition to one or more monomers (m). In that case, co-monomers (m') may be selected from the list consisting of:
- hydrophobic monomers including styrene or its derivatives, butadiene, chloroprene, (meth)acrylic esters, vinyl esters of a carboxylic acid, for instance vinyl acetate, vinyl versatate or vinyl propionate,and vinyl nitriles, vinyl halides, vinylamine amides, especially vinylformamide or vinylacetamide" N'-alkyl(meth)acylamides of at least C8, N',N'-dialkyl(meth)acrylamides of at least C6,
- hydrophilic monomers as defined here-above for monomer (mAₕ), and
- mixture thereof.

These co-monomers (m') may be chosen depending on the specific use of the polymer dispersion of the invention. Typically, the ratio by weight (m)/(m') of the monomer(s) (m) to the co-monomer(s) (m') present in the polymer dispersion is at least 50:50, for example at least 55:45, e.g. at least 60:40 or 75:25 in some cases.

According to one embodiment of the invention, at least one kind of monomers is used in the medium (M) to form a homopolymer.

According to one embodiment of the invention, at least two monomers (namely two kinds of monomers) are used to form a random, gradient or block copolymer.

According to the invention, the monomers (m) can be easily adapted to inhibit the paraffin waxes of variable molecular weight. For example, for a high molecular weight paraffin wax, an alkyl (meth)acrylate with long chain of alkyl can be chosen.

Typically, the ratio by weight between the pre-polymer (p0) and the monomer (m) is between 2 to 50%, preferably between 5 to 30%, for example between 5 to 25%.

### Method for wax inhibitions

According to another aspect, a subject of the present invention is a method for inhibiting wax formation in an oil comprising adding to said oil the above-mentioned polymer dispersion.

According to another aspect, a subject of the present invention is a method for improving the flow properties of an oil comprising adding to said oil the above-mentioned polymer dispersion.

The polymer dispersion of the present invention can be added to an oil pipeline by batch or continuous injection or squeezing, upstream or downstream of the location of any potential cold area likely to result in deposition of wax, gelation, thickening, sludging, etc. Also, the polymer dispersion can be added at the cold area (reservoir, tank, container, etc.) to decrease the pour point of the oil. The polymer dispersion can be also added at hot area for example in case of squeezing, upstream or downstream. In any cases, the oil may be crude oil, condensate, middle distillate, fuel oil, diesel, etc.

According to another aspect, a subject of the present invention is a wax inhibitor composition, including the polymer dispersion of the present invention and optionally with other additives selected e.g. from amphoteric surfactants, anionic surfactants, wetting agent, phosphate esters, sulfosuccinates, olefin sulfonates, linear alkyl benzene sulfonates, alkyl polyglucosides, alkyl ether carboxylates, alcohol ethoxylates, fatty acid ethoxylates, alkyl amine ethoxylates, alkanolamides, quaternary ammonium salts, amidoamines, diamines, corrosion inhibitors, asphaltene inhibitors Also, such as wax dissolvers or additional winterizing agents can be added together with the polymer dispersion of invention to the crude oil (even if such winterizing agents are in most cases not necessary, due to the presence of the water miscible solvent present in medium (M)).

The following examples are presented for purposes of illustration and are not intended to limit the scope of this invention.

### Examples

The following examples made use of an aqueous solution of pre-polymer called "P-Xa" prepared as follows:
In a 2L double jacketed reactor, equipped with a condenser, a mechanical stirrer, a thermal probe and a nitrogen inlet, one introduced 140.68 g of deionized water, 78.15 g of ethanol, 18.74 g of Rhodixan A1, and 67.50 g of dimethylacrylamide. The mixture was deoxygenated by nitrogen bubbling for 30 minutes. Then the mixture was heated to 40 °C in 30 minutes. When the temperature into the reactor reached 40 °C, 11.13 g of an aqueous solution of ammonium persulfate at 10 wt% and 3.12 g of an aqueous solution of sodium formaldehyde sulfoxilate at 0.65 wt% were added shotwise. Then 908 g of an aqueous solution of dimethylacrylamide at 42 wt% was added for 180 minutes, and 24.50g of an aqueous solution of sodium formaldehyde sulfoxilate at 0.75 wt% was added for 300 minutes. After the end of the introduction of NaFS, the mixture was heated to 40 °C for 3 hours.
The poly(dimethylacrylamide)-Xa ("P-Xa") was obtained at the end of the reaction.

### Example 1:

In a 2L double jacketed reactor, equipped with a condenser, a mechanical stirrer, a thermal probe and a nitrogen inlet, one introduced 238 g of deionized water, 517 g of tripropylene glycol, 450 g of an aqueous solution of P-Xa at 38wt%, and 570 g of octadecyl acrylate. The mixture was deoxygenated by nitrogen bubbling for 30 minutes. Then the mixture was heated to 70 °C. When the temperature into the reactor reached 70 °C, 4.88 g of sodium persulfate solubilized in a minimum amount of water was added shotwise. The mixture was then heated to 70 °C for 8 hours.
After filtration over 45 µm, one obtained a stable dispersion D1 with a solid content of 40 wt% on average.

### Example 2:

In a 250 mL three neck round bottom flask, equipped with a condenser, a mechanical stirrer, a thermal probe and a nitrogen inlet, one introduced 16.23 g of deionized water, 47.24 g of tripropylene glycol, 50 g of an aqueous solution of P-Xa at 38wt%, 22.83 g of 2-Ethyl hexyl acrylate (2-EHA) and 53.21 g of octadecyl acrylate. The mixture was deoxygenated by nitrogen bubbling for 30 minutes. Then the mixture was heated to 70 °C. When the temperature into the reactor reached 70 °C, 0.54 g of sodium persulfate solubilized in a minimum amount of water was added shotwise. The mixture was then heated to 70 °C for 8 hours.

After filtration over 45 µm, one obtained a stable dispersion D2 with a solid content of 40 wt% on average.

### Example 3:

In a 250 mL three neck round bottom flask, equipped with a condenser, a mechanical stirrer, a thermal probe and a nitrogen inlet, one introduced 32.01 g of deionized water, 0.14 of sodium bicarbonate, 56.82 g of tripropylene glycol, 40 g of an aqueous solution of P-Xa at 38wt%, and 42.58 g of iso-octyl acrylate. The mixture was deoxygenated by nitrogen bubbling for 30 minutes. Then, 18.22 g of vinyl acetate was introduced into the flask and homogenized with the reaction mixture. The mixture was then heated to 70 °C. When the temperature into the reactor reached 70 °C, 0.41 g of ammonium persulfate solubilized in a minimum amount of water was added shotwise. The mixture was then heated to 70 °C for 8 hours.
After filtration over 45 µm, one obtained a stable dispersion D3 with a solid content of 40 wt% on average.

### Example 4:

In a 250 mL three neck round bottom flask, equipped with a condenser, a mechanical stirrer, a thermal probe and a nitrogen inlet, one introduced 16.23 g of deionized water, 47.24 g of tripropylene glycol, 50 g of an aqueous solution of P-Xa at 38wt% and 53.21 g of octadecyl acrylate., The mixture was deoxygenated by nitrogen bubbling for 30 minutes. Then the mixture was heated to 70 °C. When the temperature into the reactor reached 70 °C, 0.54 g of sodium persulfate solubilized in a minimum amount of water was added shotwise. After one hour, 22.83 g of 2-Ethyl hexyl acrylate were added shotwise in the reactor. The mixture was then heated to 70 °C for 7 hours.
After filtration over 45 µm, one obtained a stable dispersion D4 with a solid content of 40 wt% on average.

### Comparative example

A dispersion (DO) has been prepared according to the example 1 of WO 03/014170.

### Stability test of dispersion

Samples of the polymer dispersions were stored at 20°C and 50°C respectively to assess the stability of the dispersions. The appearance of the dispersions was assessed over a 4 week period.

**Table 1 : Stability of the dispersions at ambient (20°C) and 50°C respectively**

| Dispersion | Temperature (°C) | Stability (weeks) | |
|---|---|---|---|
| | | 1 | 4 |
| D1 | 20 | Yes | Yes |
| | 50 | Yes | Yes |
| D2 | 20 | Yes | Yes |
| | 50 | Yes | Yes |
| D3 | 20 | Yes | Yes |
| | 50 | Yes | Yes |
| D4 | 20 | Yes | Yes |
| | 50 | Yes | Yes |
| D0 | 20 | Yes | No |
| | 50 | Yes | No |

It has been found that the dispersions of invention (D1 to D4) are stable (with no signs of phase separation and no solidification) over at least 4 weeks.

Also, it has been found that the dispersions of invention are stable at -20°C over at least 24h.

As a comparison, the dispersion of comparative example D0 shows instability (solidification of the dispersion) after 4 weeks at each temperature (-20°C, 20°C and 50°C).

### Application tests:

### Model Crude Oil

The model crude oil was comprised of a mixture of paraffin waxes dispersed in a dodecane. The mixture of paraffins used for the crude oil is provided as followings:

| **Component** |
|---|
| Paraffin wax, melting point c.a. 53 - 57°C (commercialized by Sigma Aldrich under ref. 327204) |
| Paraffin wax, melting point c.a. 65°C min (commercialized by Sigma Aldrich under ref. 411663) |

The waxes were dissolved in the dodecane by heating the mixture to 70 - 80°C until clear. The mixture is then stored at this temperature for several hours prior to use to remove the thermal history. The compositions of the crude oils used for the various tests are provided as followings:

| **Component** | **Mixture 1** **Wax morphology study** | **Mixture 2** **Rheology study** |
|---|---|---|
| Paraffin wax, melting point c.a. 53 - 57°C | 2.75% w/v | 5.50% w/v |
| Paraffin wax, melting point c.a. 65°C min | 2.25% w/v | 4.50% w/v |
| Dodecane | Balance to 100% w/v | Balance to 100% w/v |

### Formulation 1

The dispersion D1 was formulated with a wetting agent (AEROSOL OT-70/PG) and propylene glycol. The polymer concentration was reduced to 35% active (as solids) for the tests. Formulation 1 has the composition given in the table below:

| **Component** | **% w/w** |
|---|---|
| dispersion D1 | 87.5 |
| AEROSOL OT-70/PG | 7.0 |
| Propylene glycol | 5.5 |

### Methods

### • Polarized Light Microscopy - Wax Morphology

The performance attributes of the Formulation 1 were screened by adding Formulation 1 (5000 ppm active) to sample of 10g of Mixture 1. The sample was mixed thoroughly and stored at 85°C (above the wax appearance temperature) for 1- 2 hours to eliminate the thermal history of the sample before cooling overnight in a refrigerator at 0 - 5°C.

The appearance of the sample was noted after removal from the refrigerator and assessed using a polarized light microscope (model SP200 XP ex Brunel Microscopes Limited) with camera attachment. The microscope was set at 100x magnification and the textures observed were viewed either with crossed polarizers or crossed polarizers and mica filter (1/4 λ test plate). Images of the textures were taken using a digital camera (Canon EOS1200D) and processed using image capture software (Canon EOS utility software).

### • Rheology Studies

A Brookfield DVI+ viscometer and small sample adapter was used to measure the viscosity of the oil. The small sample adapter was connected to a refrigerated bath that was programmed to reduce the temperature at a rate of 0.5 - 1.0°C/min. The adapter and spindle (SC-18 or No 31) were pre-heated at 85°C before the oil was added. The samples containing Formulation 1 were stored in an oven at 85°C, above the wax appearance temperature, to remove any 'thermal history'. The model crude oil was allowed to equilibrate in the sample cell at the designated temperature, i.e. 85°C, for 30 minutes before starting the test. The temperature of the samples was monitored using a thermocouple mounted in the cell and the viscosity was measured at regular intervals. The shear rate was fixed and could be calculated from the rotation rate and the conversion factor for the spindle. The onset of gelation was observed by the rapid increase in the apparent viscosity of the samples. The end point of the test was taken at the point where the maximum torque reading on the viscometer was exceeded.

Viscosity vs temperature profiles were determined for Mixture 2, without and with Formulation 1 of different concentration (50, 100 and 500 ppm active). The viscosity of selected samples was measured over -15°C to 35°C temperature range.

### • Cloud Point and Pour Point Studies

Pour points of Mixture 2 containing Formulation 1 at a concentration of 500 ppm active were determined using standard test methodologies (ASTM D97). Samples of the Mixture 2 without and with Formulation 1 were stored in clear glass vials and immersed in a programmable refrigerated circulator bath. The samples were stored at a temperature above the wax appearance temperature, c.a. 60 - 70°C for several hours before reducing the temperature of the bath. The vials were removed from the bath at regular intervals and the appearance was assessed. The temperatures of the cloud point, and ceases to pour when the vials were tilted was recorded.

### Results

### • Wax Morphology: Appearance of the Mixture 1 containing Formulation 1 (5000ppm active)

Paraffin wax crystals exhibit characteristic textures when observed with polarized light. The waxes produced an elongated batonet or rod shape crystal. Formulation 1 changed the shape of the crystals and produced a dispersion of the crystals in the mixutre.

| | **Appearance at 0 - 5°C** |
|---|---|
| Mixture 1 alone | Thick gel. Sample does not move when the vial is tipped. |
| Mixture 1 with Formulation 1 | Mobile, pourable dispersion. Wax crystals are < 5 µm and appear to be fully dispersed when viewed with polarized light microscope. |

### • Rheology study: Viscosity vs temperature data for Mixture 2 without and with Formulation 1

| **Sample** | **Conc. of Formulation 1 added (ppm)** | **Viscosity (cps) at temperature of** | | | | | | | | | |
|---|---|---|---|---|---|---|---|---|---|---|---|
| | | **-10 °C** | **-5 °C** | **0 °C** | **5 °C** | **10 °C** | **15 °C** | **20 °C** | **25 °C** | **30 °C** | **35 °C** |
| Mixture 2 alone | 0 | - | - | - | - | 557 | 369 | 232 | 131 | 56 | 1 |
| Mixture 2 with Formulation 1 | 50 | - | - | 190 | 172 | 137 | 84 | 33 | 2 | 1 | 1 |
| | 100 | - | - | 133 | 128 | 102 | 50 | 7 | 1 | 1 | 1 |
| | 500 | 135 | 115 | 103 | 94 | 83 | 39 | 3 | 1 | 1 | 1 |

### • Cloud point and Pour point Measurements: Pour point results for Formulation 1 (500ppm active) in Mixture 2

| | **Cloud Point (°C)** | **Pour Point (°C)** |
|---|---|---|
| Mixture 2 alone | 33 | 32 |
| Mixture 2 with Formulation 1 | 33 | 0 |

## Claims

1. A process for preparation of a polymer dispersion comprising a step (E) of free radical polymerization in an aqueous medium (M) in the presence of:
- at least a pre-polymer (p0) soluble in the medium (M) of formula (I):
(R¹¹)*x*-Z¹¹-C(=S)-Z¹²-[A]-R¹² (I)
wherein:
Z¹¹ represents C, N, O, S or P,
Z¹² represents S or P,
R¹¹ and R¹², which may be identical or different, represent:
• an optionally substituted alkyl, acyl, aryl, alkene or alkyne group (i), or
• a saturated or unsaturated, optionally substituted or aromatic carbon-based ring (ii), or
• a saturated or unsaturated, optionally substituted heterocycle (iii), these groups and rings (i), (ii) and (iii) possibly being substituted with substituted phenyl groups, substituted aromatic groups or groups: alkoxycarbonyl or aryloxycarbonyl (-COOR), carboxyl (-COOH), acyloxy (-O₂CR), carbamoyl (-CONR₂), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino (-NR₂), halogen, allyl, epoxy, alkoxy (-OR), S-alkyl, S-aryl, groups of hydrophilic or ionic nature such as the alkali metal salts of carboxylic acids, the alkali metal salts of sulphonic acid, polyalkylene oxide (PEO or PPO) chains and cationic substituents (quaternary ammonium salts), R respresenting an alkyl or aryl group,
x corresponds to the valency of Z¹¹, or alternatively x is 0, in which case Z¹¹ represents a phenyl, alkene or alkyne radical, optionally substituted with an optionally substituted alkyl; acyl; aryl; alkene or alkyne group; an optionally substituted, saturated, unsaturated, or aromatic, carbon-based ring; an optionally substituted, saturated or unsaturated heterocycle; alkoxycarbonyl or aryloxycarbonyl (-COOR); carboxyl (COOH); acyloxy (-O₂CR); carbamoyl (-CONR₂); cyano (-CN); alkylcarbonyl; alkylarylcarbonyl; arylcarbonyl; arylalkylcarbonyl; phthalimido; maleimido; succinimido; amidino; guanidimo; hydroxyl (-OH); amino (-NR₂); halogen; allyl; epoxy; alkoxy (-OR), S-alkyl; S-aryl groups; groups of hydrophilic or ionic nature such as the alkali metal salts of carboxylic acids, the alkali metal salts of sulphonic acid, polyalkylene oxide (PEO or PPO) chains and cationic substituents (quaternary ammonium salts); and
[A] represents a polymer chain;
- at least one free-radical polymerization initiator, and
- at least one ethylenically unsaturated hydrophobic monomer (m) which is chosen from an alkyl (meth)acrylate of at least C6, typically, of or more than C8,
wherein the aqueous medium (M) includes water and at least one water miscible solvent.

2. The process according to claim 1, wherein the polymer chain [A] is selected from the homo- and copolymers (random, gradient or block) resulting from the polymerization of at least one or more hydrophilic monomers (mAₕ) selected from:
- ethylenically unsaturated monocarboxylic and dicarboxylic acids, such as acrylic acid, methacrylic acid, itaconic acid, maleic acid or fumaric acid,
- unsaturated carboxylic acid amides, such as acrylamide, methacrylamide, N-methylolacrylamide or -methacrylamide, N-alkyl(meth)acrylamides, N,N-dimethyl(meth)acrylamide, N,N-dimethylaminomethyl(meth)acrylamide, 2-(N,N-dimethylamino)ethyl(meth)acrylamide, 3-(N,N-dimethylamino)propyl(meth)acrylamide, or 4-(N,N-dimethylamino)butyl(meth)acrylamide,
- vinylamine amides, in particular vinylformamide, vinylacetamide, N-vinylpyrrolidone and N-vinylcaprolactam.

3. The process according to claim 2, the polymer chain [A] has a number-average molar mass of less than 50 000 g/mol, for example, less than 20 000 g/mol and more than 500 g/mol.

4. The process according to claim 2, wherein the pre-polymer (p0) is obtained by a preparation step (E⁰) of controlled radical polymerization of a composition comprising:
- monomers containing (and usually consisting of) identical or different (generally identical) hydrophilic monomers (mAₕ), optionally together with at least one hydrophobic monomer;
- a radical polymerization control agent; and
- a free-radical polymerization initiator.

5. The process according to claim 4, wherein the radical polymerization control agent is a xanthate, dithiocarbamate or dithiocarbazate, preferably xanthate.

6. The process according to any of claims 1 to 5, wherein the water miscible solvent is present in the medium (M) in an amount of at least 15% by weight of the total weight of the medium, preferably of at least 30% by weight.

7. The process according to any of claims 1 to 6, wherein the water is present in an amount of at least 50% by weight of the total weight of the medium, preferably of at least 60% by weight.

8. The process according to any of claims 1 to 7, wherein the water miscible solvent is a glycol, preferably ethylene glycol and/or tripropylene glycol.

9. The process according to claim 1, wherein at least one monomer (m) is chosen from an alkyl (meth)acrylate between C8 and C24.

10. The process according to claim 9, wherein the monomer (m) is chosen from iso-octyl (meth)acrylate, iso-bornyl (meth)acrylate, lauryl (meth)acrylate, octadecyl (meth)acrylate, 2-ethyl hexyl (meth)acrylate, C22 alkyl acrylate and/or a mixture thereof.

11. A polymer dispersion obtainable according to the process of any of claims 1 to 10.

12. A wax inhibitor composition including the polymer dispersion of claim 11 and optionally other additives selected from amphoteric surfactants, anionic surfactants, wetting agent, phosphate esters, sulfosuccinates, olefin sulfonates, linear alkyl benzene sulfonates, alkyl polyglucosides, alkyl ether carboxylates, alcohol ethoxylates, fatty acid ethoxylates, alkyl amine ethoxylates, alkanolamides, quaternary ammonium salts, amidoamines, diamines, corrosion inhibitors, asphaltene inhibitors.

13. A method for inhibiting wax formation in an oil comprising adding to said oil a polymer dispersion of claim 11.

14. A method for improving the flow properties of an oil comprising adding to said oil a polymer dispersion of claim11.
